# EUROPÄISCHE PATENTSCHRIFT

(11) **EP 3 327 056 B1**
(45) Veröffentlichungstag und Bekanntmachung des Hinweises auf die Patenterteilung: **27.04.2022**
(21) Anmeldenummer: 16200721.5
(22) Anmeldetag: 25.11.2016
(51) Int. Cl.: C08G 18/66, C08G 18/72, C08G 18/76, C08G 18/12, C09J 175/08

(54) **NIEDRIG-VISKOSE, SCHNELL HÄRTENDE KASCHIERKLEBSTOFF-ZUSAMMENSETZUNG**
LOW VISCOSITY, FAST CURING ADHESIVE LAMINATE-COMPOSITION
COMPOSITION DE COLLE DE CONTRECOLLAGE PEU VISQUEUSE, DURCISSANT RAPIDEMENT

(43) Veröffentlichungstag der Anmeldung: 30.05.2018
(73) Patentinhaber: Henkel AG & Co. KGaA, 40589 Düsseldorf (DE)
(72) Erfinder: SEEHAGEN, Ines, 41460 Neuss (DE); HÖLTGEN, Michael, 40591 Düsseldorf (DE); GARMANN, Helga, 40724 Hilden (DE); BANKMANN, Dennis, 40595 Düsseldorf (DE)

(56) Entgegenhaltungen:
- WO-A1-93/09158
- WO-A1-2010/091806
- WO-A1-2014/184270
- WO-A1-2016/001265
- WO-A2-2012/054922
- US-A1- 2012 263 836

## Beschreibung

Die vorliegende Erfindung betrifft einen 2-Komponenten-Polyurethan-Klebstoff, insbesondere zum Kaschieren von Folien, enthaltend, bezogen auf das Gesamtgewicht der Kaschierklebstoff-Zusammensetzung, (a) als Harzkomponente mindestens ein NCO-terminiertes Polyurethanpräpolymer mit einem Gehalt, bezogen auf das Gesamtgewicht der Harzkomponente, von mindestens 40 Gew.-% Diphenylmethandiisocyanat (MDI), wobei das MDI 4,4'-Diphenylmethandiisocyanat oder eine Mischung davon mit 2,4'-Diphenylmethandiisocyanat ist, und (b) als Härterkomponente eine Polyolmischung umfassend mindestens drei unterschiedliche Polyole ,wobei die 2K-Komponenten-Kaschierklebstoff-Zusammensetzung einen Gehalt von weniger als 10 Gew.-% an Polyestern, bezogen auf das Gesamtgewicht der Kaschierklebstoffzusammensetzung, aufweist, und wobei die Zusammensetzung bei einer Temperatur von 40°C eine Viskosität von 500 bis 5000 mPas aufweist, bestimmt nach DIN ISO 2555.

Die vorliegende Erfindung betrifft darüber hinaus die Verwendung des Klebstoffs zum Verkleben von Folien, Verfahren zum Herstellen von Verbundfolien sowie mit dem beschriebenen Klebstoff verklebte Verbundfolien. Kaschierklebstoffe sind in der Industrie allgemein bekannt. Es handelt sich dabei um lösemittelhaltige oder lösemittelfreie, vernetzende oder physikalisch abbindende Klebstoffe, die dazu dienen, dünne, flächige Substrate, wie beispielsweise Kunststofffolien, Metallfolien, Papier oder Kartonagen, miteinander zu verkleben. Dabei ist es wesentlich, dass durch die Verklebung die Flexibilität der dünnen einzelnen Lagen nur wenig vermindert, aber trotzdem eine ausreichende Haftung erzielt wird. Durch die Auswahl der einzelnen Folienlagen ist es möglich, bestimmte Eigenschaften dieser Mehrschichtfolien zu beeinflussen, insbesondere Durchlässigkeit für Wasser, andere Flüssigkeiten, Chemikalienbeständigkeit, Durchlässigkeit für Sauerstoff oder andere Gase. Aus solchen Mehrschichtfolien werden beispielsweise Verpackungen für Lebensmittel in fester, pastöser oder flüssiger Form, Kunststoffbestecke, medizinische Materialien, chemische Produkte, Kosmetika, Reinigungsmittel oder Gegenstände gefertigt. Weiterhin werden solche Laminate für technische Produkte wie beispielsweise flexible Leiter, Elektroisolationsmaterialen, Segel oder Komponenten für die Photovoltaik verwendet.

Aus den oben genannten Lebensmittelanwendungsgebieten ergibt sich, dass diese Mehrschichtfolien keine Stoffe enthalten dürfen, die aus den Verpackungen in gesundheitsschädlichen Mengen in das verpackte Gut migrieren. Es ist schließlich auch wünschenswert, dass die Mehrschichtfolien ein ansprechendes optisches Erscheinungsbild haben. Im Stand der Technik sind als Klebstoffe für solche Anwendungsgebiete insbesondere 2-Komponenten-Systeme, vor allem 2K-Systeme auf Basis von Polyurethanen bekannt. Diese werden vor der Anwendung gemischt und dann in Mengen von typischerweise etwa 1-5 g/m² auf eine der zu verklebenden Folien aufgetragen. Durch das Aufkaschieren der zweiten Folie auf die mit dem Klebstoff beschichtete Seite der ersten Folie lassen sich nach der Aushärtung Verbundfolien erhalten, die als Verpackungsmaterial, insbesondere für Lebensmittel aber auch für die weiteren oben genannten Anwendungen eingesetzt werden. Derartige Klebstoffsysteme sind üblicherweise transparent.

Nachteile der bekannten Systeme liegen allerdings darin, dass Polyurethan-basierte 2-Komponenten-Systeme einen Überschuss an monomeren Isocyanat-Gruppen aufweisen. Dieser Überschuss muss mit Wasser abreagieren, um ein vollständig gehärtetes Produkt zu ergeben. Während dieser Reaktion bilden sich wiederum primäre aromatische Amine (PAA), die durch Reagieren mit weiteren Isocyanat-Gruppen abgebaut werden müssen. Gemäß europäischen Regularien dürfen Lebensmittel nur mit solchen Verpackungen versehen werden, die primäre aromatische Amine unterhalb einer Detektionsgrenze von 10 ppb aufweisen. Ein weiterer Nachteil eines hohen Anteils an monomeren Isocyanat-Gruppen besteht in längeren Aushärtungszeiten. Allerdings können mit solchen Systemen relativ niedrige Viskositäten erzielt werden, die eine gute Verarbeitbarkeit gewährleisten.

Im Stand der Technik ist der Einsatz von Hexan-1,6-diisocyanat (HDI) bekannt, um den Abbau der primären aromatischen Amine zu fördern. Für gewöhnlich werden solche Systeme mit präpolymerisierten Komponenten formuliert, um den Gehalt an monomeren Isocyanat-Gruppen zu verringern. Des Weiteren werden Polyesterpolyole zur Steigerung der Haftung eingesetzt. Diese Systeme weisen allerdings relativ hohe Viskositäten auf und führen bei der Verarbeitung, mit Laufzeiten von >250m/min in Laminiermaschinen, zu unerwünschter Nebelbildung.

Die der vorliegenden Erfindung zugrundeliegende Aufgabe bestand folglich darin, Polyurethan-Klebstoffe zur Verfügung zu stellen, die die genannten Nachteile nicht aufweisen.

Es wurde nämlich überraschenderweise gefunden, dass die oben genannten Nachteile durch ein Polyurethan-basiertes 2-Komponenten-System enthaltend mindestens ein NCO-terminiertes Polyurethanpräpolymer mit einem Gehalt von mindestens 40 Gew.-% Diphenylmethandiisocyanat (MDI), wobei das MDI 4,4'-Diphenylmethandiisocyanat oder eine Mischung davon mit 2,4'-Diphenylmethandiisocyanat ist, als Harzkomponente und eine Polyolmischung umfassend mindestens drei unterschiedliche Polyole als Härterkomponente, wobei die 2K-Komponenten-Kaschierklebstoff-Zusammensetzung einen Gehalt von weniger als 10 Gew.-% an Polyestern, bezogen auf das Gesamtgewicht der Kachierklebstoffzusammensetzung, aufweist, und wobei die Zusammensetzung bei einer Temperatur von 40°C eine Viskosität von 500 bis 5000 mPas aufweist, bestimmt nach DIN ISO 2555, überwunden werden können. Die wie hierin beschriebenen Systeme zeichnen sich durch gute Verarbeitbarkeit (niedrige Viskositäten, >300m/min in Laminiermaschinen) und schnelle chemische (PAA Abbau) sowie physikalische Aushärtungsraten aus.

Die Erfindung betrifft daher eine 2-Komponenten-Kaschierklebstoff-Zusammensetzung auf Polyurethanbasis, insbesondere zum Kaschieren von Folien, gemäss Anspruch 1.

In einem weiteren Aspekt betrifft die Erfindung ein Verfahren zur Herstellung von Verbundfolien, in dem mindestens zwei gleiche oder unterschiedliche Kunststofffolien unter Verwendung einer Kaschierklebstoff-Zusammensetzung wie hierin beschreiben verklebt werden und entsprechend hergestellte Verbundfolien.

Die Erfindung erfasst auch die Verwendung derart hergestellter Verbundfolien als Verpackung, insbesondere zur Verpackung von Arznei- oder Lebensmitteln.

In noch einem weiteren Aspekt betrifft die Erfindung die Verwendung der hierin beschriebenen Kaschierklebstoff-Zusammensetzungen zum Verkleben von Folien.

Die im vorliegenden Text angegebenen Molekulargewichte beziehen sich, soweit nicht anders angegeben, auf das Zahlenmittel des Molekulargewichts (Mn). Das Molekulargewicht Mn kann auf Basis einer Endgruppenanalyse (Hydroxylzahl gemäß DIN 53240-1:2013-06), oder durch Gelpermeationschromatographie (GPC) gemäß DIN 55672-1:2007-08 mit Polystyrol als Standard und THF als Eluent bestimmt werden. Falls nicht anders angegeben, sind die aufgeführten Molekulargewichte solche, die mittels Hydroxylzahl bestimmt wurden. Das Gewichtsmittel des Molekulargewichts Mw kann ebenfalls mittels GPC, wie oben angegeben, bestimmt werden.

"Mindestens ein", bezogen auf einen Inhaltsstoff, bezieht sich die Angabe auf die Art des Inhaltsstoffs und nicht auf die absolute Zahl der Moleküle. "Mindestens ein Polyol" bedeutet somit beispielsweise mindestens eine Art von Polyol, d.h. dass eine Art von Polyol oder eine Mischung mehrerer verschiedener Polyole verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

"Ungefähr" oder "ca.", wie hierin im Zusammenhang mit einem Zahlenwert verwendet bezieht sich auf den Zahlenwert ±10 %, vorzugsweise ±5%.

Polyurethan-Klebstoffe sind allgemein bekannt. Diese werden auch zum Kaschieren von Mehrschichtfolien eingesetzt. Bei den erfindungsgemäß geeigneten Klebstoffen handelt es sich um 2-Komponenten-Polyurethan-Klebstoffe. Die Klebstoffe können flüssig sein. Die Klebstoffe können Lösemittel enthalten, bevorzugt sind sie jedoch frei von Lösemitteln. Die Vernetzung der erfindungsgemäßen geeigneten Polyurethan-Klebstoffe beruht auf der Umsetzung von reaktiven NCO-Gruppen mit H-aciden funktionellen Gruppen, beispielsweise OH-Gruppen, Aminogruppen oder Carboxylgruppen. Eine alternative Vernetzungsmethode besteht darin, dass die NCO-Gruppen mit Feuchtigkeit aus dem aufgetragenen Klebstoff, dem Substrat, oder der Umgebung unter Bildung von Harnstoffgruppen reagieren. Diese Vernetzungsreaktionen sind bekannt, sie können auch nebeneinander ablaufen. Zur Beschleunigung solcher Reaktionen können Katalysatoren in den Klebstoff eingebracht werden, beispielsweise Amin-, Titan- oder Zinnkatalysatoren.

Es wurde überraschenderweise in Tests zur Bestimmung von Migraten gefunden, dass die hierin beschriebenen Systeme im Vergleich zu im Stand der Technik geläufigen Systemen anderer Zusammensetzungen weniger primäre aromatische Amine (PAA) freisetzen, wodurch die sogenannte PAA-Zerfallszeit (*PAA decay time*) deutlich abnimmt. Solche PAA entstehen bei der Aushärtung von Polyurethanen aus freien Polyisocyanaten, die unter der Einwirkung von Feuchtigkeit zu den entsprechenden Aminen abreagieren. Da PAA als gesundheitsschädlich gelten, ist es wünschenswert, deren Entstehung bzw. deren Migration in das verpackte Gut zu verringern oder zu verhindern. Im weiteren Verlauf der Aushärtung reagieren die zwischenzeitlich gebildeten PAA mit Isocyanatüberschuss zwar ab, je mehr PAA in der Zwischenstufe aber gebildet werden, umso länger dauert die Zeit zur Erreichung eines im Wesentlichen ,migratfreien' Verbundes.

Des Weiteren hat sich überraschenderweise gezeigt, dass durch die hierin beschriebenen 2-Komponenten (2K) -Formulierungen die Verbundhaftung ausgewählter Systeme trotz geringer Polyesterpolyol-Gehalte nicht abnimmt, sondern in einigen Fällen sogar zunimmt. Das bedeutet, dass sich durch die hierin beschriebenen Formulierungen die Leistung der Klebstoffe verbessern lässt. Auch die mechanischen Eigenschaften können verbessert werden. So wurde gefunden, dass ein möglichst geringer Gehalt von weniger als 10 Gew.-% an Polyestern in der Klebstoff-Zusammensetzung zu niedrigen Viskositäten führt, die ein schnelles Durchlaufen der Applikationsmaschinen ermöglichen. Darüber hinaus wird die für Polyester-haltige Klebstoff-Zusammensetzungen typische Nebelbildung verhindert, die üblicherweise beim Durchlaufen Polyester-haltiger Klebstoff-Zusammensetzungen durch die Applikationsmaschine auftritt. Auch die Geschwindigkeit des Aufbaus der Verbundhaftung der wie hierin beschriebenen Formulierungen ist mit im Stand der Technik bekannten Systemen vergleichbar bzw. schneller.

Bei dem erfindungsgemäßen Klebstoff handelt es sich um einen 2-Komponenten-(2K)-Polyurethan-Klebstoff. Erfindungsgemäß enthält ein Klebstoff als Harzkomponente mindestens ein NCO-terminiertes Polyurethanpräpolymer und als Härterkomponente mindestens eine Polyolmischung.

Die Isocyanat (NCO)-terminierten PU-Präpolymere der Harzkomponente werden durch Umsetzen eines Polyols oder einer Polyolmischung mit einem stöchiometrischen Überschuss von Polyisocyanat erhalten. Die bei der Herstellung des Präpolymers eingesetzten Polyole können alle üblicherweise für die Polyurethansynthese eingesetzten Polyole, beispielsweise Polyole, Polyesterpolyole, Polyetherpolyole, Polyesteretherpolyole, Polycarbonatpolyole oder Mischungen von zwei oder mehr der genannten sein.

Polyetherpolyole können aus einer Vielzahl von Alkoholen hergestellt werden, die eine oder mehrere, primäre oder sekundäre Alkoholgruppen enthalten. Als Starter für die Herstellung der keine tertiären Aminogruppen enthaltenden Polyether können beispielsweise folgende Verbindungen oder Mischungen dieser Verbindungen eingesetzt werden: Wasser, Ethylenglykol, Propylenglykol, Glycerin, Butandiol, Butantriol, Trimethylolethan, Pentaerythrit, Hexandiol, 3-Hydroxyphenol, Hexantriol, Trimethylolpropan, Oktandiol, Neopentylglykol, 1,4-Hydroxymethylcyclohexan, Bis(4-hydroxyphenyl)dimethylmethane und Sorbit. Bevorzugt werden Ethylenglykol, Propylenglykol, Glycerin und Trimethylolpropan eingesetzt, besonders bevorzugt Ethylenglykol und Propylenglykol, und in einer besonders bevorzugten Ausführungsform wird Propylenglykol eingesetzt.

Als cyclische Ether zur Herstellung von vorstehend beschriebenen Polyethern kommen Alkylenoxide wie Ethylenoxid, Propylenoxid, Butylenoxid, Epichlorhydrin, Styroloxid oder Tetrahydrofuran oder Gemische aus diesen Alkylenoxiden in Betracht. Bevorzugt werden Propylenoxid, Ethylenoxid oder Tetrahydrofuran oder Gemische aus diesen verwendet. Besonders bevorzugt wird Propylenoxid oder Ethylenoxid oder Gemische aus diesen verwendet. Ganz besonders bevorzugt wird Propylenoxid verwendet.

Polyesterpolyole können beispielsweise durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton hergestellt werden. Ebenfalls als polyfunktionelle Alkohole zur Herstellung von Polyesterpolyolen geeignet sind 1,4-Hydroxymethylcyclohexan, 2-Methyl-1,3-propandiol, 1,2,4-Butantriol, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren oder Tricarbonsäuren oder Gemischen aus Dicarbonsäuren oder Tricarbonsäuren, oder deren reaktiven Derivaten, zu Polyesterpolyolen kondensiert werden. Geeignete Dicarbonsäuren sind beispielsweise Adipinsäure oder Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden. Besonders geeignete Alkohole sind Hexandiol, Butandiol, Ethylenglykol, Diethylenglykol, Neopentylglykol, 3-Hydroxy-2,2-dimethylpropyl-3-hydroxy-2,2-dimethylpropanoat oder Trimethylolpropan oder Gemische aus zwei oder mehr davon. Besonders geeignete Säuren sind Phthalsäure, Isophthalsäure, Terephthalsäure, Adipinsäure oder Dodekandisäure oder deren Gemische. Polyesterpolyole mit hohem Molekulargewicht umfassen beispielsweise die Umsetzungsprodukte von polyfunktionellen, bevorzugt difunktionellen Alkoholen (gegebenenfalls zusammen mit geringen Mengen an trifunktionellen Alkoholen) und polyfunktionellen, bevorzugt difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit bevorzugt 1 bis 3 C- Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Dodekandisäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet.

Aus Lactonen, beispielsweise auf Basis von epsilon-Caprolacton, auch "Polycaprolactone" genannt, oder Hydroxycarbonsäuren, beispielsweise omega-Hydroxycapronsäure, erhältliche Polyester, können ebenfalls eingesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Polycarbonatpolyole können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen dieser Diole mit Diarylcarbonaten, beispielsweise Diphenylcarbonaten, oder Phosgen, erhalten werden.

Das Molekulargewicht der zur Synthese des Präpolymers verwendeten Polyole liegt vorzugsweise im Bereich von 100 bis 20000 g/mol, insbesondere 330 bis 4500 g/mol. Die mittlere Funktionalität kann im Bereich von 2 bis 4,5 liegen. Das PU-Präpolymer weist vorzugsweise ein Polyether/Polyester-Rückgrat auf. In bevorzugten Ausführungsformen weist die erfindungsgemäße Zusammensetzung jedoch einen Polyestergehalt von weniger als 10 Gew.-%, bezogen auf das Gesamtgewicht der Klebstoff-Zusammensetzung, auf.

Der stöchiometrische Überschuss von Polyisocyanat im PU-Präpolymer beträgt, bezogen auf das molare Verhältnis von NCO- zu OH-Gruppen, insbesondere 1:1 bis 1,8:1, vorzugsweise 1:1 bis 1,6:1 und besonders bevorzugt 1,05:1 bis 1,5:1.

Es können die bekannten Lack- oder Klebstoff-Polyisocyanate eingesetzt werden, wobei es sich um Polyisocyanate mit zwei oder mehr Isocyanat-Gruppen handelt. Geeignete Polyisocyanate sind beispielsweise 1,5-Naphthylendiisocyanat (NDI), 2,4- oder 4,4'-Diphenylmethandiisocyanat (MDI), hydriertes MDI (H12MDI), Xylylendiisocyanat (XDI), Tetramethylxylylendiisocyanat (TMXDI), Di- und Tetraalkylendiphenylmethandiisocyanat, 4,4'-Dibenzyldiisocyanat, 1,3- oder 1,4-Phenylendiisocyanat, Toluylendiisocyanat (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Methylentriphenyltriisocyanat (MIT), Phthalsäure-bis-isocyanatoethylester, Trimethylhexamethylendiisocyanat, 1,4-Diisocyanatobutan, 1,12-Diisocyanatododecan und Dimerfettsäurediisocyanat.

Als mindestens trifunktionelle Isocyanate geeignet sind Polyisocyanate, die durch Trimerisation oder Oligomerisation von Diisocyanaten oder durch Reaktion von Diisocyanaten mit niedermolekularen, polyfunktionellen hydroxyl- oder aminogruppenhaltigen Verbindungen entstehen. Kommerziell erhältliche Beispiele sind Trimerisierungsprodukte der Isocyanate HDI, MDI oder IPDI oder Addukte aus Diisocyanaten und niedermolekularen Triolen, wie Trimethylolpropan oder Glycerin. Weitere Beispiele sind Isocyanurate des Hexamethylendiisocyanates (HDI) und Isocyanurate des Isophorondiisocyanats (IPDI).

Es können im Prinzip aliphatische, cycloaliphatische oder aromatische Isocyanate eingesetzt werden, insbesondere sind jedoch aromatische Diisocyanate geeignet. Ein besonders bevorzugtes aromatisches Diisocyanat ist 4,4-Methylendiphenyldiisocyanat, das entweder allein oder in Mischung mit 2,4-Methylendiphenyldiisocyanat eingesetzt werden kann. Die erfindungsgemäßen PU-Klebstoffe können die Isocyanate umgesetzt als PU-Präpolymere enthalten oder sie enthalten zumindest anteilig niedermolekulare, ggf. oligomere, Isocyanate.

Aus den oben erwähnten Polyolen und den Polyisocyanaten können auf bekannte Art und Weise PU-Präpolymere hergestellt werden. Dabei kann aus den Polyolen und den Isocyanaten ein NCO-Gruppen-haltiges Präpolymer hergestellt werden. Beispiele dafür sind in der EP-A951493, EP-A1341832, EP-A 150444, EP-A 1456265, WO 2005/097861 beschrieben.

Das mindestens eine NCO-terminierte PU-Präpolymer ist vorzugsweise ein aromatisches Isocyanat-terminiertes, noch bevorzugter MDI-terminiertes Polyurethan-Präpolymer aus einem oder mehreren Polyetherpolyol(en) oder einer Polyether-/Polyesterpolyolmischung und einem aromatischen Diisocyanat, wie MDI.

Gemäß der vorliegenden Erfindung weist die Harzkomponente der Klebstoff-Zusammensetzung, bezogen auf das Gesamtgewicht der Harzkomponente, einen Gehalt von mindestens 40 Gew.-% Diphenylmethandiisocyanat (MDI), wobei das MDI 4,4'-Diphenylmethandiisocyanat oder eine Mischung davon mit 2,4'-Diphenylmethandiisocyanat ist, auf. 2,2'-Diphenylmethandiisocyanat ist vorzugsweise nicht oder nur in vergleichsweise geringen Mengen, d.h. weniger als 2 Gew.-%, vorzugsweise weniger als 1 Gew.-%, bezogen auf das Gesamtgewicht der Harzkomponente enthalten.

Die entsprechenden Präpolymere weisen üblicherweise einen NCO-Gehalt von 5-20 Gew.-% (bestimmt nach Spiegelberger, DIN EN ISO 11909:2007-05) auf und haben eine mittlere NCO-Funktionalität von 2 bis 3.

Aufgrund des eingesetzten Überschusses an Isocyanat, enthalten die NCO-terminierten PU-Präpolymere üblicherweise gewisse Mengen an Isocyanat-Monomeren, d.h. insbesondere aromatischen Polyisocyanat-Monomeren, wie beispielsweise MDI, typischerweise in Mengen von 0,1 bis 25 Gew.-% bezogen auf das Gesamtgewicht von Präpolymeren und Monomeren.

Das Molekulargewicht (Mn) des Präpolymers liegt im Bereich von 1500 g/mol bis 100 000 g/mol, insbesondere bevorzugt von 2000 g/mol bis 50 000 g/mol.

In dem erfindungsgemäßen Bindemittel-System, ist neben der Harzkomponente eine Härterkomponente enthalten. Gemäß der vorliegenden Erfindung umfasst die Härterkomponente mindestens drei unterschiedliche Polyole.

Geeignete Polyole sind aliphatische und/oder aromatische Alkohole mit 2 bis 6, vorzugsweise 2 bis 4, OH-Gruppen pro Molekül. Die OH-Gruppen können sowohl primär als auch sekundär sein.

Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren. Ebenfalls geeignet sind höher funktionelle Alkohole wie beispielsweise Glycerin, Trimethylolpropan, Pentaerythrit sowie oligomere Ether der genannten Substanzen.

Bevorzugt werden als Polyolkomponente Umsetzungsprodukte niedermolekularer polyfunktioneller Alkohole mit Alkylenoxiden, eingesetzt. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid oder Butylenoxid, oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet. Weitere, im Rahmen der Erfindung gebräuchliche Polyole, entstehen durch Polymerisation von Tetrahydrofuran (Poly-THF).

Ebenfalls zum Einsatz als Polyolkomponente geeignet sind Polyether, die durch Vinylpolymere modifiziert wurden. Derartige Produkte sind beispielsweise erhältlich, indem Styrol- oder Acrylnitril, oder deren Gemisch, in der Gegenwart von Polyethern polymerisiert werden.

Weiter geeignete Polyole sind Polyesterpolyole.

Beispiele dafür sind Polyesterpolyole, die durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen.

Weitere geeignete Polyesterpolyole sind durch Polykondensation herstellbar. Derartige Polyesterpolyole umfassen bevorzugt die Umsetzungsprodukte von polyfunktionellen, vorzugsweise difunktionellen Alkoholen und polyfunktionellen, vorzugsweise difunktionellen und/oder trifunktionellen Carbonsäuren oder Polycarbonsäureanhydriden. Zur Herstellung derartiger Polyesterpolyole geeignet sind insbesondere Hexandiol, 1,4-Hydroxymethylcyclohexan, 2-Methyl-1,3-propandiol, Butantriol-1,2,4, Triethylenglykol, Tetraethylenglykol, Ethylenglykol, Polyethylenglykol, Dipropylenglykol, Polypropylenglykol, Dibutylenglykol und Polybutylenglykol. Es können auch Anteile an trifunktionellen Alkoholen zugesetzt werden.

Die Polycarbonsäuren können, aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können auch Anteile an Tricarbonsäuren zugesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Auch die Hydroxy-funktionellen Polybutadiene, wie sie z.B. unter dem Handelsnamen Poly-bd^{®} erhältlich sind, können für die erfindungsgemäßen Zusammensetzungen als Polyole eingesetzt werden.

Wie jedoch bereits im Zusammenhang mit dem mindestens einen PU-Präpolymer dargelegt weist die erfindungsgemäße Zusammensetzung in bevorzugten Ausführungsformen einen Polyestergehalt von weniger als 10 Gew.-%, bezogen auf das Gesamtgewicht der Klebstoff-Zusammensetzung, auf.

Ebenfalls als Polyolkomponente geeignet sind Polyacetale. Unter Polyacetalen werden Verbindungen verstanden, wie sie aus Glykolen, beispielsweise Diethylenglykol oder Hexandiol oder deren Gemisch mit Formaldehyd erhältlich sind. Im Rahmen der Erfindung einsetzbare Polyacetale können ebenfalls durch die Polymerisation cyclischer Acetale erhalten werden. Weiterhin als Polyole geeignet sind Polycarbonate. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden. Ebenfalls geeignet sind Hydroxyester von Polylactonen.

Eine weitere Gruppe von Polyolen können OH-funktionelle Polyurethanpolyole, beispielsweise OHterminierte Polyurethanpräpolymere, sein.

Ebenfalls als Polyolkomponente geeignet sind OH-Gruppen tragende Polyacrylate. Diese Polyacrylate sind beispielsweise erhältlich durch die Polymerisation von ethylenisch ungesättigten Monomeren, die eine OH-Gruppe tragen. Hierzu geeignete ethylenisch ungesättigte Carbonsäuren sind beispielsweise Acrylsäure, Methacrylsäure, Crotonsäure oder Maleinsäure oder deren Ester mit C1 bis C2-Alkoholen. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

In einigen Ausführungsformen ist eines der mindestens drei unterschiedlichen Polyole der Härterkomponente ein Triol, insbesondere auf Basis von Glycerin oder Trimethylolpropan (TMP), an welches Alkylenoxid (AO), insbesondere Propylenoxid (PO), addiert ist und das ein Molekulargewicht M_{w} von weniger als 700 g/mol, vorzugsweise 400 bis <700 g/mol, noch bevorzugter 450 bis <700 g/mol aufweist. In einigen Ausführungsformen umfasst die Härterkomponente der erfindungsgemäßen Zusammensetzung 5 bis 90 Gew.-%, vorzugsweise 15 bis 60 Gew.-%, insbesondere 25 bis 40 Gew.-% mindestens eines solchen Triols. Gemäß einigen Ausführungsformen kann es sich bei diesem mindestens einen Triol insbesondere um ein Propylenoxid(PO)-basiertes Triol handeln, wie beispielsweise ein Glycerin- oder TMP-gestartetes Molekül an welches Propylenoxid addiert ist. Gemäß bevorzugten Ausführungsformen handelt es sich bei dem mindestens einen Triol um ein Propylenoxid-basiertes Triol mit einem Molekulargewicht M_{w} von mindestens 400, insbesondere mindestens 450 bis <700 g/mol

In einigen Ausführungsformen ist eines der mindestens drei unterschiedlichen Polyole der Härterkomponente ein aliphatischer zwei- oder mehrwertiger, vorzugsweise 2- bis 4-wertiger Alkohol, vorzugsweise mit einem Molekulargewicht <150 g/mol und/oder vorzugsweise mit einer Hydroxylzahl von 700-2000 mgKOH/g, bevorzugter 1200-1900 mgKOH/g. In einigen Ausführungsformen umfasst die Härterkomponente der erfindungsgemäßen Zusammensetzung 0,5 bis 10 Gew.-%, vorzugsweise 2 bis 8 Gew.-%, insbesondere 3 bis 7 Gew.-% mindestens eines solchen aliphatischen Alkohols. Gemäß einigen Ausführungsformen kann es sich bei diesem mindestens einen aliphatischen Alkohol um einen aliphatischen Alkohol ausgewählt aus der Gruppe bestehend aus Ethylenglykol, Propylenglykol, Butandiol-1,4, Pentandiol-1,5, Hexandiol-1,6, Heptandiol-1,7, Octandiol-1,8, Glycerin, Trimethylolpropan und Pentaerythrit handeln. In einigen Ausführungsformen handelt es sich bei dem mindestens einen aliphatischen Alkohol insbesondere um Trimethylolpropan.

In einigen Ausführungsformen handelt es sich bei einem der mindestens drei unterschiedlichen Polyole der Härterkomponente um höhermolekulare AO-basierte Triole, die wie oben definiert sind, aber ein Molekulargewicht M_{w} von mehr als 700 g/mol, vorzugsweise >700 bis 1200 g/mol, aufweisen oder Rizinusöl. In einigen Ausführungsformen umfasst die Härterkomponente der erfindungsgemäßen Zusammensetzung 5 bis 80 Gew.-%, vorzugsweise 15 bis 70 Gew.-%, insbesondere 20 bis 65 Gew.-% an solchen Triolen oder Rizinusöl. Derartige Triole sind als Voranol^{®} CP 755 oder CP 1055 kommerziell erhältlich (Dow Chemical).

In verschiedenen Ausführungsformen der Erfindung enthält die Härterkomponente mindestens 2 vorzugsweise alle drei der vorgenannten Polyole, d.h. (1) mindestens ein Triol, insbesondere auf Basis von Glycerin oder Trimethylolpropan (TMP), an welches Alkylenoxid (AO), insbesondere Propylenoxid (PO), addiert ist und das ein Molekulargewicht M_{w} von weniger als 700 g/mol, vorzugsweise 400 bis <700 g/mol, noch bevorzugter 450 bis <700 g/mol aufweist; (2) mindestens ein aliphatischer zwei- oder mehrwertiger, vorzugsweise 2- bis 4-wertiger, vorzugsweise monomerer Alkohol; und (3) mindestens ein Triol, insbesondere auf Basis von Glycerin oder Trimethylolpropan (TMP), an welches Alkylenoxid (AO), insbesondere Propylenoxid (PO), addiert ist und das ein Molekulargewicht M_{w} von mehr als 700 g/mol, vorzugsweise >700 bis 1200 g/mol, aufweist oder Rizinusöl.

Es kann in verschiedenen Ausführungsformen bevorzugt sein, dass der Gehalt an Polyestern in der Kaschierklebstoff-Zusammensetzung möglichst gering ist, d.h. beispielsweise weniger als 10 Gew.-% bezogen auf das Gesamtgewicht der Zusammensetzung beträgt. "Polyester" bezieht sich hierbei sowohl auf Polyestereinheiten in der Harzkomponente als auch auf solche in der Härterkomponente. In besonders bevorzugten Ausführungsformen sind die erfindungsgemäßen Zusammensetzungen frei von Polyestern. "Frei von", wie in diesem Zusammenhang verwendet, bedeutet, dass die entsprechende Zusammensetzung den genannten Bestandteil, d.h. Polyester, nicht oder nicht als bewusst zugesetzten Bestandteil enthält. Die Menge des Bestandteils in der jeweiligen Zusammensetzung ist daher vorzugsweise kleiner als 1 Gew.-%, noch bevorzugter kleiner als 0,5 Gew.-%, noch bevorzugter kleiner 0,1 Gew.-%, am meisten bevorzugt kleiner als 0,01 Gew.-% oder unterhalb der Nachweisgrenze.

In einigen Ausführungsformen beträgt das NCO:OH-Verhältnis von Harzkomponente zu Härterkomponente weniger als 1,4, vorzugsweise weniger als 1,3, insbesondere weniger als 1,25, noch bevorzugter zwischen 1,0 und 1,2.

Das hierin beschriebene Bindemittel-System kann in verschiedenen Ausführungsformen ferner mindestens einen Katalysator enthalten, insbesondere ausgewählt aus Metallkatalysatoren auf Basis von Sn oder Ti oder Aminkatalysatoren. Geeignete Katalysatoren sind im Stand der Technik bekannt. Der Katalysator ist vorzugsweise in der Härterkomponente, d.h. in den erfindungsgemäß bevorzugten Systemen in der Hydroxy-funktionalisierten Komponente, enthalten.

Weiterhin können in dem erfindungsgemäßen Klebstoff die üblichen Additive enthalten sein. Bei den weiteren Bestandteilen handelt es sich beispielsweise um Harze (Tackifier), Stabilisatoren, Vernetzungsmittel oder Viskositätsregler, Pigmente, Weichmacher oder Antioxidantien.

Die erfindungsgemäßen Polyurethan-Klebstoffe sind bei Applikationstemperaturen flüssig. Es ist bevorzugt, dass die erfindungsgemäßen PU-Klebstoffe bei Raumtemperatur flüssig sind. Die hierin beschriebenen Zusammensetzungen haben, in verschiedenen Ausführungsformen, bei einer Temperatur von 40°C eine Viskosität von 500 bis 5000, insbesondere 600 bis 900 mPas, bestimmt nach DIN ISO 2555 (Brookfield-Viskosimeter RVT, Spindel Nr. 4, 25°C; 5 UpM).

Die hierin beschriebenen Klebstoffe können Lösemittel enthalten oder lösemittelfrei sein. Als Lösemittel sind grundsätzlich alle dem Fachmann bekannte Lösemittel verwendbar, insbesondere Ester, Ketone, halogenierte Kohlenwasserstoffe, Alkane, Alkene und aromatische Kohlenwasserstoffe. Beispiele für solche Lösemittel sind Methylenchlorid, Trichlorethylen, Toluol, Xylol, Butylacetat, Amylacetat, Isobutylacetat, Methylisobutylketon, Methoxybutylacetat, Cyclohexan, Cyclohexanon, Dichlorbenzol, Diethylketon, Di-isobutylketon, Dioxan, Ethylacetat, Ethylenglykolmonobutyletheracetat, Ethylenglykolmonoethylacetat, 2-Ethylhexylacetat, Glykoldiacetat, Heptan, Hexan, Isobutylacetat, Isooctan, Isopropylacetat, Methylethylketon, Tetrahydrofuran oder Tetrachlorethylen oder Mischungen aus zwei oder mehr der genannten Lösemittel.

In bevorzugten Ausführungsformen sind die hierin beschriebenen Klebstoff-Zusammensetzungen jedoch im Wesentlichen frei von organischen Lösemitteln.

Die Klebstoffe werden mit üblichen Aggregaten und mit allen gängigen Auftragsverfahren auf die zu verklebenden Substrate, insbesondere Folien, aufgetragen, beispielsweise durch Sprühen, Rakeln, 3-4-Walzenauftragswerke im Falle der Anwendung eines lösemittelfreien Systems oder 2-Walzenauftragswerke im Falle der Anwendung eines lösemittelhaltigen Systems. Nach der Aufbringungen werden die zu verklebenden Substrate auf bekannte Art und Weise miteinander verklebt. Dabei ist es zweckmäßig, ggf. erhöhte Temperaturen anzuwenden, um eine bessere Applikation und schnellere Vernetzungsreaktion zu erzielen. Die erfindungsgemäßen Klebstoffe zeigen aber bereits bei Raumtemperatur oder nur gering erhöhten Temperaturen, wie 40°C, eine sehr gute Aushärtung.

Die erfindungsgemäßen Polyurethan-Klebstoffe sind insbesondere als Kaschierklebstoffe für Folien geeignet. Sie können in einem Verfahren eingesetzt werden, bei dem bekannte Folien auf Basis von Polymeren, wie PP, PE, OPA, Polyamid, PET, Polyester, Metallfolien miteinander verklebt werden. Dabei wird der erfindungsgemäße Klebstoff auf eine ggf. vorbehandelte oder bedruckte Folie aufgetragen. Die Auftragungsmenge beträgt dabei üblicherweise 1-5 g/m². Das kann bei erhöhter Temperatur stattfinden, um eine dünne und gleichmäßige Beschichtung zu erzielen. Unter Druck wird dann eine zweite Folie aus gleichem oder anderen Material aufkaschiert. Es kann erwärmt werden, der Klebstoff vernetzt und es entsteht eine Mehrschichtfolie. Diese kann ggf. auch aus mehr als zwei Schichten bestehen.

Üblicherweise werden die Folien nach der Herstellung gelagert. Während dieser Zeit ist es möglich, dass sich die erfindungsgemäßen Klebstoffe weiter vernetzen.

Durch die Verwendung der erfindungsgemäßen flüssigen oder Schmelzklebstoffe als Kaschierkleber ist es möglich, kaschierte zwei- oder Mehrschicht-Folien zu erhalten, die den hohen Anforderungen an eine Eignung für Lebensmittel- oder medizinische Verpackungen genügen.

Alle hierin im Zusammenhang mit dem PU-Klebstoff offenbarten Ausführungsformen sind natürlich auch auf die beschriebenen Verwendungen und Verfahren anwendbar und umgekehrt.

Nachfolgend soll die Erfindung an einigen exemplarischen Beispielen näher erläutert werden. Dabei sind die angegeben Mengen Gewichtsprozent, falls nicht anders angegeben.

### Beispiele

### Beispiel 1 (erfindungsgemäß)

Harzbasis:
NCO-terminiertes MDI-Präpolymer mit einem NCO-Gehalt von 12-14 Gew.-% und einem NCO:OH-Verhältnis von 3,9:1, bestehend aus
50 Gew.-% 4,4'-Diphenylmethandiisocyanat (MDI); 5 Gew.-% Polypropylenglykol (PPG) mit Mw=400 g/mol; 25 Gew.-% Polypropylenglykol (PPG) mit Mw=1000 g/mol; 10 Gew.-% Polypropylenglykol (PPG) mit Mw=2000 g/mol; 10 Gew.-% Hexan-1,6-diisocyanat (HDI) Trimer.

Härter:
Polyolmischung mit einem OH-Wert von 330-370 mgKOH/g und einer Funktionalität f=3, bestehend aus
5 Gew.-% Trimethylolpropan; 70 Gew.-% trifunktionellem Polypropylenglykol (PPG) mit Mw=450 g/mol; 25 Gew.-% Rizinusöl.

### Mischverhältnis Harz:Härter 100:40 Gewichtsteile

### Beispiel 2 (erfindungsgemäß)

Harzbasis:
NCO-terminiertes MDI-Präpolymer mit einem NCO-Gehalt von 12-14 Gew.-% und einem NCO:OH-Verhältnis von 3,9:1, bestehend aus
50 Gew.-% 4,4'-Diphenylmethandiisocyanat (MDI); 5 Gew.-% Polypropylenglykol (PPG) mit Mw=400 g/mol; 25 Gew.-% Polypropylenglykol (PPG) mit Mw=1000 g/mol; 10 Gew.-% Polypropylenglykol (PPG) mit Mw=2000 g/mol; 10 Gew.-% Hexan-1,6-diisocyanat (HDI) Trimer.

Härter:
Polyolmischung mit einem OH-Wert von 270-310 mgKOH/g und einer Funktionalität f=3, bestehend aus
5 Gew.-% Trimethylolpropan; 30 Gew.-% trifunktionellem Polypropylenglykol (PPG) mit Mw=450 g/mol; 65 Gew.-% Rizinusöl.

### Mischverhältnis Harz:Härter 100:50 Gewichtsteile

### Beispiel 3 (erfindunqsqemäß)

Harzbasis:
NCO-terminiertes MDI-Präpolymer mit einem NCO-Gehalt von 11,5-13,5 Gew.-% und einem NCO:OH-Verhältnis von 3,9:1, bestehend aus
50 Gew.-% 4,4'-Diphenylmethandiisocyanat (MDI); 5 Gew.-% Polypropylenglykol (PPG) mit Mw=400 g/mol; 25 Gew.-% Polypropylenglykol (PPG) mit Mw=1000 g/mol; 10 Gew.-% Polypropylenglykol (PPG) mit Mw=2000 g/mol; 10 Gew.-% Toluylendiisocyanat (TDI) -Präpolymer*.

Härter:
Polyolmischung mit einem OH-Wert von 330-370 mgKOH/g und einer Funktionalität f=3, bestehend aus
5 Gew.-% Trimethylolpropan; 70 Gew.-% trifunktionellem Polypropylenglykol (PPG) mit Mw=450 g/mol; 25 Gew.-% Rizinusöl.
*TDI-Präpolymer: Reaktionsprodukt von 2,4'-TDI mit einem Polyetherdiol mit Mw=400...1000, entmonomerisiert

### Mischverhältnis Harz:Härter 100:40 Gewichtsteile

### Beispiel 4 (Vergleichsbeispiel)

Harzbasis:
NCO-terminiertes MDI-Präpolymer mit einem NCO-Gehalt von 12,0-13,5 Gew.-% und einem NCO:OH-Verhältnis von 3,1:1, bestehend aus
55 Gew.-% 4,4'-Diphenylmethandiisocyanat (MDI); 15 Gew.-% Polypropylenglykol (PPG) mit Mw=1000 g/mol; 15 Gew.-% Polypropylenglykol (PPG) mit Mw=400 g/mol; 15 Gew.-% bifunktionellem Polyester*.

Härter:
Polyolmischung mit einem OH-Wert von 155-175 mgKOH/g und einer Funktionalität f=3, bestehend aus
100 Gew.-% Rizinusöl.
*Polyester basierend auf Isophthalsäure, Adipinsäure, 1,2-Propandiol, Diethylenglykol.

### Mischverhältnis Harz:Härter 100:75 Gewichtsteile

### Beispiel 5 (Vergleichsbeispiel)

Harzbasis:
NCO-terminiertes MDI-Präpolymer mit einem NCO-Gehalt von 13,0-15,0 Gew.-% und einem NCO:OH-Verhältnis von 3,7:1, bestehend aus
51 Gew.-% 4,4'-Diphenylmethandiisocyanat (MDI); 10 Gew.-% Hexan-1,6-diisocyanat (HDI) Trimer; 13 Gew.-% Polypropylenglykol (PPG) mit Mw=1000 g/mol; 13 Gew.-% Polypropylenglykol (PPG) mit Mw=400 g/mol; 13 Gew.-% bifunktionellem Polyester*.

Härter:
Polyolmischung mit einem OH-Wert von 200-230 mgKOH/g und einer Funktionalität f~2,3, bestehend aus
75 Gew.-% bifunktionellem Polyester; 22 Gew.-% Polypropylenglykol (PPG) Triol mit Mw=450 g/mol; 3 Gew.-% Trimethylolpropan.
*Polyester basierend auf Isophthalsäure, Adipinsäure, 1,2-Propandiol, Diethylenglykol.

### Mischverhältnis Harz:Härter 100:65 Gewichtsteile

### Beispiel 6 (Vergleichsbeispiel)

Harzbasis:
NCO-terminiertes MDI-Präpolymer mit einem NCO-Gehalt von 11,0-13,0 Gew.-% und einem NCO:OH-Verhältnis von 2,6:1, bestehend aus
30 Gew.-% 4,4'-Diphenylmethandiisocyanat (MDI); 5 Gew.-% Toluylendiisocyanat (TDI); 10 Gew.% Hexan-1,6-diisocyanat (HDI) Trimer; 15 Gew.-% Polypropylenglykol (PPG) mit Mw=400 g/mol; 20 Gew.-% Polypropylenglykol (PPG) mit Mw=1000 g/mol; 10 Gew.-% Polypropylenglykol (PPG) mit Mw=2000 g/mol; 10 Gew.-% bifunktionellem Polyester*.
*Polyester basierend auf Isophthalsäure, Adipinsäure, 1,2-Propandiol, Diethylenglykol.

Härter:
Polyolmischung mit einem OH-Wert von 240-270 mgKOH/g und einer Funktionalität f~2,3, bestehend aus
15 Gew.-% bifunktionellem Polyester A*; 50 Gew.-% bifunktionellem Polyester B**; 10 Gew.-% Polypropylenglykol (PPG) mit Mw=400 g/mol; 20 Gew.-% Polypropylenglykol (PPG) Triol mit Mw=450 g/mol; 5 Gew.-% Trimethylolpropan.

### Mischverhältnis Harz:Härter 100:45 Gewichtsteile

*Polyester A basierend auf Isophthalsäure, Adipinsäure, 1,2-Propandiol, Diethylenglykol.
** Polyester B basierend auf Isophthalsäure, Adipinsäure, Diethylenglykol.

### Beispiel 7 (Vergleichsbeispiel)

Harzbasis:
NCO-terminiertes TDI-Präpolymer mit einem NCO-Gehalt von 9,0-10,5 Gew.-%, bestehend aus
100 Gew.-% Toluylendiisocyanat (TDI) -Präpolymer*.

Härter:
Polyestermischung mit einem OH-Wert von 155-175 mgKOH/g und einer Funktionalität f=2,5, bestehend aus
100 Gew.-% Polyester C***
*TDI-Präpolymer: Reaktionsprodukt von 2,4'-TDI mit einem Polyetherdiol mit Mw=400...1000, entmonomerisiert.
*** Polyester C basierend auf Isophthalsäure, Diethylenglykol, Rizinusöl.

### Mischverhältnis Harz:Härter 100:55 Gewichtsteile

### Verbundfolie:

Die Herstellung der Verbundfolien erfolgt mit Hilfe eines Laminiergeräts des Typs Super Combi 2000. Dabei wird die Klebstoffzusammensetzung in einer Menge von 2 g/m² auf eine der zu verklebenden Folien (OPA bzw. metOPP) aufgetragen und diese Folie dann mit der zweiten Folie (PE bzw. OPP) unter Druck kaschiert. Der wirkende Walzendruck des Kaschierwerks entspricht dabei einer Kraft von bis zu 200 N (20 kg).

### Verbundhaftung:

Die Bestimmung der Verbundhaftung erfolgt in Anlehnung an die Norm DIN 53357 nach 14 Tagen Härtung bei Raumtemperatur mittels einer Zugprüfmaschine der Firma Instron (Instron 4301). Dazu werden Probestreifen der Verbundfolie (Probenbreite von 15 mm) zwischen Klemmbacken eingespannt und diese dann bei einer Abzugsgeschwindigkeit von 100 m/min, einem Abzugswinkel von 90° und einer Abzugslänge von 5 bis 10 cm auseinandergezogen. Es wird der Mittelwert einer Dreifachbestimmung der maximalen aufzubringenden Kraft bezogen auf die Probenbreite von 15 mm angegeben.

### Gehalt an primären aromatischen Aminen (PAA):

Es wird die Zeit angegeben, die nach dem Verkleben der Folien abzuwarten ist, bis der Klebstoff als "im Wesentlichen migratfrei" gilt. Dies ist dann der Fall, wenn der Gehalt an primären aromatischen Aminen (PAA) geringer als 0,2 µg/100mL Füllgut ist. Als Füllgut bzw. Füllgutsimulanz wird 3%ige Essigsäure verwendet. Als Verpackung dient ein mittels des Klebstoffs hergestelltes OPA/PE-Laminat, welches durch Heißversiegelung das Füllgut umschließt, wobei die PE-Seite die Innenseite der Verpackung und die Innenseite der Siegelnaht bildet. Der Gehalt an primären aromatischen Aminen erfolgt mittels Photometrie nach § 64 des Lebensmittel-, Bedarfsgegenstände- und Futtermittelgesetzbuches der Bundesrepublik Deutschland (LFGB) gemäß der Methode L 00.006.

### Verbundmaterialien:

OPA: orientiertes Polyamid
PE: Polyethylen
PET: Polyethylenterephthalat
OPP: orientiertes Polypropylen
metOPP: metallisiertes OPP (OPP beschichtet mit Aluminium)

**Tabelle 1: Experimentelle Parameter**

| | Parameter | Breitester Bereich | Engster Bereich |
|---|---|---|---|
| 1 | Mischviskosität bei Applikationstemperatur | <1.000 mPas | 600-900 mPas |
| 2 | Topfzeit / Viskositätszunahme | <5.000 mPas nach 30 min | <4.500 mPas nach 30 min |
| | | <25.000 mPas nach 60 min | <20.000 mPas nach 60 min |
| 3 | Laufzeit: Experimenteller Versuch auf Laminierungsausrüstung | Super Combi-Maschine >300 m/min ohne Nebelbildung | Super Combi-Maschine >300 m/min ohne Nebelbildung |
| 4 | Zunahme der Bindungsstärke: PET/PE | >3 N/15mm nach 1 Tag | PET-Riss nach 1 Tag |
| 5 | Knittertest | Keine Delamination nach 1 Tag | Keine Delamination nach 1 Tag |
| 6 | PAA | PAA-frei nach <5 Tagen | PAA-frei nach <5 Tagen |

## Patentansprüche

1. 2-Komponenten-Kaschierklebstoff-Zusammensetzung auf Polyurethanbasis, insbesondere zum Kaschieren von Folien, enthaltend, bezogen auf das Gesamtgewicht der Kaschierklebstoff-Zusammensetzung,
(a) als Harzkomponente mindestens ein NCO-terminiertes Polyurethanpräpolymer mit einem Gehalt, bezogen auf das Gesamtgewicht der Harzkomponente, von mindestens 40 Gew.-% Diphenylmethandiisocyanat (MDI), wobei das MDI 4,4'-Diphenylmethandiisocyanat oder eine Mischung davon mit 2,4'-Diphenylmethandiisocyanat ist, und
(b) als Härterkomponente eine Polyolmischung umfassend mindestens drei unterschiedliche Polyole,
wobei die 2K-Komponenten-Kaschierklebstoff-Zusammensetzung einen Gehalt von weniger als 10 Gew.-% an Polyestern, bezogen auf das Gesamtgewicht der Kaschierklebstoffzusammensetzung, aufweist,
und wobei die Zusammensetzung bei einer Temperatur von 40°C eine Viskosität von 500 bis 5000 mPas aufweist, bestimmt nach DIN ISO 2555.

2. Kaschierklebstoff-Zusammensetzung nach Anspruch 1 **dadurch gekennzeichnet, dass** eines der mindestens drei unterschiedlichen Polyole der Härterkomponente ein Triol ist, insbesondere auf Basis von Glycerin oder Trimethylolpropan (TMP), an welches Alkylenoxid (AO), insbesondere Propylenoxid (PO), addiert ist und das ein Molekulargewicht M_{w} von weniger als 700 g/mol, vorzugsweise 400 bis <700 g/mol, noch bevorzugter 450 bis <700 g/mol aufweist, das mit 5 bis 90 Gew.-%, vorzugsweise 15 bis 60 Gew.-%, insbesondere 25 bis 40 Gew.-% in der Härterkomponente enthalten ist, insbesondere ein Propylenoxid-basiertes Triol mit einem Molekulargewicht M_{w} von 400 bis <700 g/mol.

3. Kaschierklebstoff-Zusammensetzung nach mindestens einem der Ansprüche 1 bis 2, **dadurch gekennzeichnet, dass** eines der mindestens drei unterschiedlichen Polyole der Härterkomponente ein aliphatischer, zwei- oder mehrwertiger, vorzugsweise 2 bis 4-wertiger Alkohol, vorzugsweise mit einem Molekulargewicht von <150 g/mol und/oder einer Hydroxylzahl von 700 bis 2000 mgKOH/g, bevorzugter 1200-1900 mgKOH/g, ist, der mit 0,5 bis 10 Gew.-%, vorzugsweise 2 bis 8 Gew.-%, insbesondere 3 bis 7 Gew.-% in der Härterkomponente enthalten ist, insbesondere ausgewählt aus der Gruppe bestehend aus Ethylenglykol, Propylenglykol, Butandiol-1,4, Pentandiol-1,5, Hexandiol-1,6, Heptandiol-1,7, Octandiol-1,8, Glycerin, Trimethylolpropan und Pentaerythrit.

4. Kaschierklebstoff-Zusammensetzung nach mindestens einem der Ansprüche 1 bis 3, **dadurch gekennzeichnet, dass** eines der mindestens drei unterschiedlichen Polyole der Härterkomponente ein Triol, insbesondere auf Basis von Glycerin oder Trimethylolpropan (TMP), an welches Alkylenoxid (AO), insbesondere Propylenoxid (PO), addiert ist und das ein Molekulargewicht M_{w} von 700 bis 1200 g/mol aufweist, insbesondere ein Propylenoxid-basiertes Triol mit einem Molekulargewicht M_{w} von 700 bis 1200 g/mol, oder Rizinusöl ist, das mit 5 bis 80 Gew.-%, vorzugsweise 15 bis 70 Gew.-%, insbesondere 20 bis 65 Gew.-% in der Härterkomponente enthalten ist.

5. Kaschierklebstoff-Zusammensetzung nach einem der Ansprüche 1 bis 4, **dadurch gekennzeichnet, dass** das NCO:OH-Verhältnis von Harzkomponente zu Härterkomponente weniger als 1.4, vorzugsweise weniger als 1,3, insbesondere weniger als 1,25, noch bevorzugter 1,0 bis 1,2 beträgt.

6. Kaschierklebstoff-Zusammensetzung nach einem der Ansprüche 2 bis 5, **dadurch gekennzeichnet, dass** die Kaschierklebstoff-Zusammensetzung enthält: (1) mindestens ein Triol, insbesondere auf Basis von Glycerin oder Trimethylolpropan (TMP), an welches Alkylenoxid (AO), insbesondere Propylenoxid (PO), addiert ist und das ein Molekulargewicht M_{w} von weniger als 700 g/mol, vorzugsweise 400 bis <700 g/mol, noch bevorzugter 450 bis <700 g/mol aufweist; (2) mindestens einen aliphatischen zwei- oder mehrwertigen, vorzugsweise 2- bis 4-wertigen, vorzugsweise monomeren Alkohol; und (3) mindestens ein Triol, insbesondere auf Basis von Glycerin oder Trimethylolpropan (TMP), an welches Alkylenoxid (AO), insbesondere Propylenoxid (PO), addiert ist und das ein Molekulargewicht M_{w} von mehr als 700 g/mol, vorzugsweise >700 bis 1200 g/mol, aufweist oder Rizinusöl.

7. Kaschierklebstoff-Zusammensetzung nach mindestens einem der Ansprüche 1 bis 6, **dadurch gekennzeichnet, dass**
(a) die Zusammensetzung ferner mindestens einen Katalysator enthält, insbesondere ausgewählt aus Metallkatalysatoren auf Basis von Sn oder Ti oder Aminkatalysatoren; und/oder
(b) die Zusammensetzung bei einer Temperatur von 40°C eine Viskosität von 600 bis 900 mPas aufweist, bestimmt gemäß DIN ISO 2555; und/oder
(c) die Zusammensetzung frei von organischen Lösungsmitteln ist.

8. Verwendung der Kaschierklebstoff-Zusammensetzung nach mindestens einem der Ansprüche 1 bis 7 zum Verkleben von Folien.

9. Verfahren zur Herstellung von Verbundfolien, **dadurch gekennzeichnet, dass** mindestens zwei gleiche oder unterschiedliche Kunststofffolien unter Verwendung einer Kaschierklebstoff-Zusammensetzung nach einem oder mehreren der Ansprüche 1 bis 7 teil- oder vollflächig verklebt werden.

10. Verfahren nach Anspruch 9, **dadurch gekennzeichnet, dass** die Kaschierklebstoffzusammensetzung in einer Menge von 1 bis 5 g/m² auf mindestens eine der zu verklebenden Oberflächen der zu verklebenden Folien aufgebracht wird.

11. Verbundfolie hergestellt nach dem Verfahren gemäß mindestens einem der Ansprüche 9 bis 10.

12. Verwendung einer Verbundfolie nach Anspruch 11 als Verpackung, insbesondere zur Verpackung von Arznei- oder Lebensmitteln.

## Claims

1. A polyurethane-based two-component laminating adhesive composition, in particular for laminating films, containing, based on the total weight of the laminating adhesive composition,
(a) at least one NCO-terminated polyurethane prepolymer having a content of at least 40 wt.% diphenylmethane diisocyanate (MDI), based on the total weight of the resin component, as a resin component, wherein the MDI is 4,4'-diphenylmethane diisocyanate or a mixture thereof with 2,4'-diphenylmethane diisocyanate, and
(b) a polyol mixture comprising at least three different polyols as a curing component, wherein the two-component laminating adhesive composition has a content of less than 10 wt.% polyesters, based on the total weight of the laminating adhesive composition,
and wherein the composition has a viscosity of 500 to 5,000 mPas at a temperature of 40 °C, determined in accordance with DIN ISO 2555.

2. The laminating adhesive composition according to claim 1, **characterized in that** one of the at least three different polyols of the curing component is a triol, in particular based on glycerol or trimethylolpropane (TMP), to which alkylene oxide (AO), in particular propylene oxide (PO), is added and which has a molecular weight M_{w} of less than 700 g/mol, preferably 400 to <700 g/mol, even more preferably 450 to <700 g/mol, and is contained in the curing component in an amount of 5 to 90 wt.%, preferably 15 to 60 wt.%, in particular 25 to 40 wt.%, in particular a propylene oxide-based triol having a molecular weight M_{w} of 400 to <700 g/mol.

3. The laminating adhesive composition according to at least one of claims 1 to 2, **characterized in that** one of the at least three different polyols of the curing component is an aliphatic, dihydric or polyhydric, preferably dihydric to tetrahydric, alcohol, preferably having a molecular weight of <150 g/mol and/or a hydroxyl number of 700 to 2,000 mgKOH/g, more preferably 1,200-1,900 mgKOH/g, which is contained in the curing component in an amount of 0.5 to 10 wt.%, preferably 2 to 8 wt.%, in particular 3 to 7 wt.%, and is in particular selected from the group consisting of ethylene glycol, propylene glycol, butanediol-1,4, pentanediol-1,5, hexanediol-1,6, heptanediol-1,7, octanediol-1,8, glycerol, trimethylolpropane and pentaerythritol.

4. The laminating adhesive composition according to at least one of claims 1 to 3, **characterized in that** one of the at least three different polyols of the curing component is a triol, in particular based on glycerol or trimethylolpropane (TMP), to which alkylene oxide (AO), in particular propylene oxide (PO), is added and which has a molecular weight M_{w} of 700 to 1,200 g/mol, in particular a propylene oxide-based triol having a molecular weight M_{w} of 700 to 1,200 g/mol, or is castor oil, which is contained in the curing component in an amount of 5 to 80 wt.%, preferably 15 to 70 wt.%, in particular 20 to 65 wt.%.

5. The laminating adhesive composition according to one of claims 1 to 4, **characterized in that** the NCO:OH ratio of resin component to curing component is less than 1.4, preferably less than 1.3, in particular less than 1.25, even more preferably 1.0 to 1.2.

6. The laminating adhesive composition according to one of claims 2 to 5, **characterized in that** the laminating adhesive composition contains: (1) at least one triol, in particular based on glycerol or trimethylolpropane (TMP), to which alkylene oxide (AO), in particular propylene oxide (PO), is added and which has a molecular weight M_{w} of less than 700 g/mol, preferably 400 to <700 g/mol, even more preferably 450 to <700 g/mol; (2) at least one aliphatic dihydric or polyhydric, preferably dihydric to tetrahydric, more preferably monomeric, alcohol; and (3) at least one triol, in particular based on glycerol or trimethylolpropane (TMP), to which alkylene oxide (AO), in particular propylene oxide (PO) is added, and which has a molecular weight M_{w} of more than 700 g/mol, preferably >700 to 1,200 g/mol, or castor oil.

7. The laminating adhesive composition according to at least one of claims 1 to 6, **characterized in that**
(a) the composition further contains at least one catalyst, in particular selected from metal catalysts based on Sn or Ti or amine catalysts; and/or
(b) the composition has a viscosity of 600 to 900 mPas at a temperature of 40 °C, determined in accordance with DIN ISO 2555; and/or
(c) the composition is free from organic solvents.

8. The use of the laminating adhesive composition according to at least one of claims 1 to 7 for adhesively bonding films.

9. A method for producing composite films, **characterized in that** at least two identical or different plastics films are adhesively bonded over part or all of the surface using a laminating adhesive composition according to one or more of claims 1 to 7.

10. The method according to claim 9, **characterized in that** the laminating adhesive composition is applied to at least one of the surfaces to be adhesively bonded of the films to be adhesively bonded in an amount of 1 to 5 g/m².

11. A composite film produced by the method according to at least one of claims 9 to 10.

12. The use of a composite film according to claim 11 as packaging, in particular for the packaging of medicaments or foods.

## Revendications

1. Composition adhésive de contrecollage à 2 constituants à base de polyuréthane, permettant en particulier le contrecollage de films, contenant, par rapport au poids total de la composition adhésive de contrecollage,
(a) au moins un prépolymère de polyuréthane à terminaison NCO comme constituant de résine avec une teneur, par rapport au poids total du constituant de résine, d'au moins 40 % en poids de diisocyanate de diphénylméthane (MDI), le MDI étant du 4,4'-diisocyanate de diphénylméthane ou un mélange de celuici avec du 2,4'-diisocyanate de diphénylméthane, et
(b) un mélange de polyols comprenant au moins trois polyols différents comme constituant durcisseur,
dans laquelle la composition adhésive de contrecollage à constituants 2K possède une teneur inférieure à 10 % en poids de polyesters, par rapport au poids total de la composition adhésive de contrecollage,
et dans laquelle la composition possède une viscosité de 500 à 5 000 MPa à une température de 40 °C, déterminée conformément à la norme DIN ISO 2555.

2. Composition adhésive de contrecollage selon la revendication 1, **caractérisée en ce que** l'un des au moins trois polyols différents du constituant durcisseur est un triol, en particulier à base de glycérol ou de triméthylolpropane (TMP), auquel de l'oxyde d'alkylène (AO), en particulier de l'oxyde de propylène (PO), est ajouté et qui possède un poids moléculaire M_{w} inférieur à 700 g/mol, de préférence de 400 à < 700 g/mol, encore plus préférentiellement de 450 à < 700 g/mol, lequel triol est contenu à mesure de 5 à 90 % en poids, de préférence de 15 à 60 % en poids, en particulier de 25 à 40 % en poids dans le constituant durcisseur, en particulier un triol à base d'oxyde de propylène avec un poids moléculaire M_{w} de 400 à < 700 g/mol.

3. Composition adhésive de contrecollage selon au moins l'une des revendications 1 à 2, **caractérisée en ce que** l'un des au moins trois polyols différents du constituant durcisseur est un alcool aliphatique bivalent ou polyvalent, de préférence bivalent à tétravalent, de préférence avec un poids moléculaire < 150 g/mol et/ou un indice d'hydroxyle de 700 à 2 000 mgKOH/g, plus préférentiellement de 1 200 à 1 900 mgKOH/g, lequel alcool est contenu à mesure de 0,5 à 10 % en poids, de préférence de 2 à 8 % en poids, en particulier de 3 à 7 % en poids dans le constituant durcisseur, et en particulier est choisi dans le groupe constitué par l'éthylène glycol, le propylène glycol, le 1,4-butanediol, le 1,5-pentanediol, le 1,6-hexanediol, le 1,7-heptanediol, le 1,8-octanediol, le glycérol, le triméthylolpropane et le pentaérythritol.

4. Composition adhésive de contrecollage selon au moins l'une des revendications 1 à 3, **caractérisée en ce que** l'un des au moins trois polyols différents du constituant durcisseur est un triol, en particulier à base de glycérol ou de triméthylolpropane (TMP), auquel de l'oxyde d'alkylène (AO), en particulier de l'oxyde de propylène (PO), est ajouté et qui possède un poids moléculaire M_{w} de 700 à 1 200 g/mol, qui est en particulier un triol à base d'oxyde de propylène avec un poids moléculaire M_{w} de 700 à 1 200 g/mol ou de l'huile de ricin contenu à mesure de 5 à 80 % en poids, de préférence de 15 à 70 % en poids, en particulier de 20 à 65 % en poids dans le constituant durcisseur.

5. Composition adhésive de contrecollage selon l'une des revendications 1 à 4, **caractérisée en ce que** le rapport NCO:OH du constituant de résine au constituant durcisseur est inférieur à 1,4, de préférence inférieur à 1,3, en particulier inférieur à 1,25, encore plus préférentiellement de 1,0 à 1,2.

6. Composition adhésive de contrecollage selon l'une des revendications 2 à 5, **caractérisée en ce que** la composition adhésive de contrecollage contient : (1) au moins un triol, en particulier à base de glycérol ou de triméthylolpropane (TMP), auquel de l'oxyde d'alkylène (AO), en particulier de l'oxyde de propylène (PO) est ajouté, et qui possède un poids moléculaire M_{w} inférieur à 700 g/mol, de préférence de 400 à < 700 g/mol, plus préférentiellement de 450 à < 700 g/mol ; (2) au moins un alcool aliphatique bivalent ou polyvalent, de préférence bivalent à tétravalent, de préférence monomère ; et (3) au moins un triol, en particulier à base de glycérol ou de triméthylolpropane (TMP), auquel de l'oxyde d'alkylène (AO), en particulier de l'oxyde de propylène (PO), est ajouté, et qui possède un poids moléculaire M_{w} supérieur à 700 g/mol, de préférence > 700 à 1 200 g/mol, ou de l'huile de ricin.

7. Composition adhésive de contrecollage selon au moins l'une des revendications 1 à 6, **caractérisée en ce que**
(a) la composition contient également au moins un catalyseur, en particulier choisi parmi des catalyseurs métalliques à base de Sn ou de Ti ou des catalyseurs aminés ; et/ou
(b) la composition possède une viscosité de 600 à 900 MPa à une température de 40 °C, déterminée conformément à la norme DIN ISO 2555 ; et/ou
(c) la composition est exempte de solvants organiques.

8. Utilisation de la composition adhésive de contrecollage selon au moins l'une des revendications 1 à 7 pour le collage de films.

9. Procédé de fabrication de films composites, **caractérisé en ce qu'**au moins deux films plastiques identiques ou différents sont collés sur leur surface partielle ou totale à l'aide d'une composition adhésive de contrecollage selon l'une ou plusieurs des revendications 1 à 7.

10. Procédé selon la revendication 9, **caractérisé en ce que** la composition adhésive de contrecollage est appliquée en une quantité de 1 à 5 g/m² sur au moins l'une des surfaces à coller des films à coller.

11. Film composite fabriqué selon le procédé conformément à au moins l'une des revendications 9 à 10.

12. Utilisation d'un film composite selon la revendication 11 comme emballage, en particulier pour l'emballage de produits pharmaceutiques ou alimentaires.
